# EUROPEAN PATENT SPECIFICATION

(11) **EP 4 183 556 B1**
(45) Date of publication and mention of the grant of the patent: **01.01.2025**
(21) Application number: 22207528.5
(22) Date of filing: 15.11.2022
(51) Int. Cl.: B29C 64/165, B33Y 70/10, B28B 1/00, C04B 35/111, C04B 35/185, C04B 35/486, C04B 35/56, C04B 35/581, C04B 35/587, C04B 35/622, C04B 35/634, C04B 35/638

(54) **THREE-DIMENSIONAL SHAPED OBJECT PRODUCING METHOD, THREE-DIMENSIONAL SHAPED OBJECT PRODUCING SYSTEM, AND THREE-DIMENSIONAL SHAPED OBJECT**
VERFAHREN ZUR HERSTELLUNG EINES DREIDIMENSIONALEN FORMKÖRPERS, SYSTEM ZUR HERSTELLUNG EINES DREIDIMENSIONALEN FORMKÖRPERS UND DREIDIMENSIONALER FORMKÖRPER
PROCÉDÉ DE PRODUCTION D'OBJET FAÇONNÉ TRIDIMENSIONNEL, SYSTEME POUR LA PRODUCTION D'OBJET FAÇONNÉ TRIDIMENSIONNEL ET OBJET FAÇONNÉ TRIDIMENSIONNEL

(30) Priority: 17.11.2021 JP 2021187019
(43) Date of publication of application: 24.05.2023
(73) Proprietor: Ricoh Company, Ltd., Tokyo 143-8555 (JP)
(72) Inventor: KAMODA, Kiichi, Tokyo, 143-8555 (JP); HAGIWARA, Hiroki, Tokyo, 143-8555 (JP)
(74) Representative: SSM Sandmair

(56) References cited:
- US-A1- 2010 279 007
- US-A1- 2018 050 491

## Description

### BACKGROUND

### Technical Field

The present disclosure relates to a three-dimensional shaped object producing method, a three-dimensional shaped object producing apparatus, and a three-dimensional shaped object.

### Related Art

As shaping materials including particles and a liquid for shaping three-dimensional shaped objects, for example, a shaping material e.g. described in Japanese Unexamined Patent Application Publication No. 2018-204105 is known, which can use various materials as supporting materials and prevent thermal deformation in removing the supporting materials. However, even in a case of using this shaping material described in Japanese Unexamined Patent Application Publication No. 2018-204105, for example, when shaping a flat plate of 50 mm × 50 mm × 4 mm in height, it has been difficult to obtain a three-dimensional shaped object that exhibits excellent shape accuracy while preventing deformation during the shaping and bleeding of a liquid outside a shaping portion.

US 2018/0050491 A1 discloses a three-dimensional shaping method for manufacturing a three-dimensional shaped object and including repeatedly performing a process of applying, to material particles each coated with a binder, a reaction solution that dissolves therein the binder or causes a binding reaction with the binder and a process of depositing the material particles. The binders bind with each other by electrostatic force.

US 2010/0279007 A1 discloses a method relating to manufacture of near net-shaped products such as ceramic containing products such as ceramic-metal composites. The method entails forming a mixture of a build material and a binder and depositing that mixture onto a surface to produce a layer of the mixture. An activator fluid then is applied to at least one selected region of the layer to bond the binder to the build material to yield a shaped pattern. These steps may be repeated to produce a porous whitebody that is heat treated to yield a porous greenbody preform having a porosity of about 30% to about 70%. The greenbody then is impregnated with a molten material such as molten metal. Where the build material is SiC, the molten metal employed is Si to generate a SiC-Si composite.

### SUMMARY

An object of the present invention is to provide a three-dimensional shaped object producing method to obtain a three-dimensional shaped object that exhibits excellent shape accuracy while preventing deformation during the shaping and bleeding of a liquid outside a shaping portion.

The invention is set out in the appended independent claims. The dependent claims describe advantageous embodiments.

The three-dimensional shaped object producing method according to an embodiment of the present invention includes the processes of forming a layer from secondary particles including a binder resin and primary particles containing a ceramic material, and applying a liquid that dissolves the binder resin on the formed layer. The liquid contains a solvent. The solvent has a boiling point of 100°C or higher and 210°C or lower. A relative energy difference (RED) between the binder resin and the solvent is 1.0 or less, and the secondary particles have a loose bulk density of 25% or higher and 55% or lower.

Embodiments of the present invention provides a three-dimensional shaped object producing method to obtain a three-dimensional shaped object that exhibits excellent shape accuracy while preventing deformation during the shaping and bleeding of liquid outside the shaping portion.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a diagram illustrating a situation where warp occurs;
FIG. 2 is a diagram illustrating a situation where bleeding occurs;
FIG. 3 is a functional block diagram illustrating an example of a three-dimensional shaped object producing apparatus;
FIG. 4A is a schematic diagram illustrating an example of a three-dimensional shaped object producing method (Part 1);
FIG. 4B is a schematic diagram illustrating an example of the three-dimensional shaped object producing method (Part 2);
FIG. 4C is a schematic diagram illustrating an example of the three-dimensional shaped object producing method (Part 3);
FIG. 4D is a schematic diagram illustrating an example of the three-dimensional shaped object producing method (Part 4);
FIG. 4E is a schematic diagram illustrating an example of the three-dimensional shaped object producing method (Part 5);
FIG. 4F is a schematic diagram illustrating an example of the three-dimensional shaped object producing method (Part 6); and
FIG. 5 is a flowchart illustrating an example of a process flow in the three-dimensional shaped object producing method.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

### (Three-Dimensional Shaped Object Producing Method and Three-Dimensional Shaped Object Producing Apparatus)

In the three-dimensional shaped object producing method according to an embodiment of the present invention, a three-dimensional shaped object is produced using primary particles containing at least a ceramic material. The method includes a formation process of forming a layer from secondary particles including the primary particles and a binder resin, and an application process of applying a liquid that dissolves the binder resin on the layer formed in the formation process, and optionally other processes.

In the three-dimensional shaped object producing apparatus according to an embodiment of the present invention, a three-dimensional shaped object is produced using primary particles containing at least a ceramic material. The apparatus includes a formation device configured to form a layer from secondary particles including the primary particles and a binder resin, and an application device configured to apply a liquid that dissolves the binder resin on the layer formed by the formation device, and optionally other devices.

The three-dimensional shaped object producing method according to an embodiment of the present invention can be desirably implemented by the three-dimensional shaped object producing apparatus. The formation process can by implemented by the formation device, the application process can be implemented by the application device, and other processes can be implemented by other devices.

Herein, terms in the present disclosure are defined as follows.

In the present disclosure, the term "three-dimensional shaping" refers to processes up to preparation of a green body before a degreasing process. In the present disclosure, the term "green body" refers to a product that is formed by repeating the formation process and the application process and includes a ceramic, a binder resin, and a solvent. In the present disclosure, the term "three-dimensional shaped object" primarily refers to a component that has been finished through all the processes, and therefore the component has been already undergone degreasing and sintering.

In the present disclosure, a solvent having a boiling point within a certain range, and a binder resin having a relative energy difference (RED) of 1.0 or less with respect to the solvent, as well as secondary particles including ceramic primary particles and the binder resin and having a loose bulk density within a certain range are used, so that a balance between solubility of the binder resin and dryness of the solvent can be desirably adjusted. Thus, each layer can be stably shaped, and a conventional problem of deformation in shaping a flat plate can be solved.

Here, the solubility (speed of dissolution) of the binder resin depends on a powder filling degree into each layer in a powder layer, a type of the solvent contained in the liquid that dissolves the binder resin, and a type of the binder resin. Since it is generally known that a powder filling degree is substantially equivalent to a loose bulk density of the powder, the loose bulk density can be evaluated as a property of the powder.

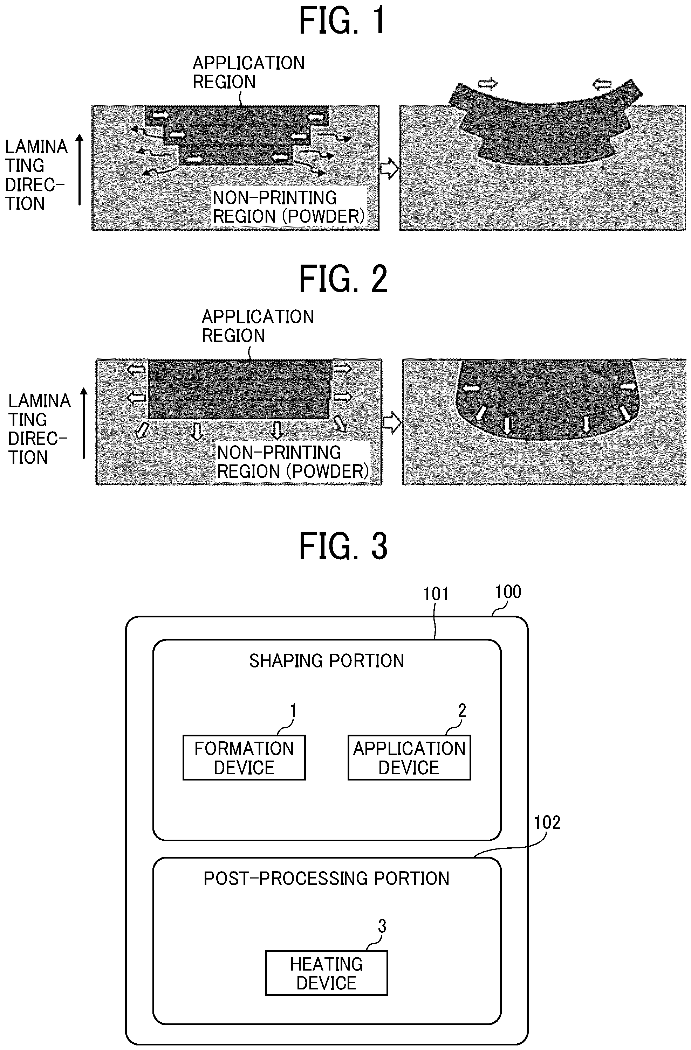

If the solubility of the binder resin is too high, the liquid spreads outside the region where the liquid that dissolves the binder resin is applied, causing problems such as bleeding (see FIG. 1). On the other hand, if the solubility of the binder resin is too low, the liquid dries before the binder resin dissolves, resulting in volumetric shrinkage due to drying. This volumetric shrinkage appears as warp in shaping e.g. a flat plate (see FIG. 2). The drying speed also varies depending on a type of the solvent in the liquid.

In the present disclosure, secondary particles including ceramic primary particles and a binder resin and having a loose bulk density within a certain range is used, and a boiling point of a solvent contained in a liquid that dissolves the binder resin is within a desirable range. Furthermore, the binder resin having a relative energy difference (RED) of 1.0 or less with respect to the solvent is used, so that a balance between solubility of the binder resin and dryness of the solvent can be desirably adjusted.

The relative energy difference (RED) is a parameter that is determined from a Hansen solubility parameter (HSP) value.

The HSP value is a Hansen solubility parameter, and composed of an energy δd (MPa^{0.5}) attributed to an intermolecular dispersion force, an energy δp (MPa^{0.5}) attributed to intermolecular dipolar interaction, and an energy 6h (MPa^{0.5}) attributed to intermolecular hydrogen bonding. The HSP value is expressed by plotting these three parameters on a three-dimensional space (Hansen space) having coordinate axes for these three parameters.

HSP values have been used by Hansen and his successor in many cases, and are described in Wesley L. Archer, "Industrial Solvents Handbook", Polymer Handbook, fourth edition, VII, pp. 698-711.

In addition, HSP values can be calculated by a Hansen solubility parameter calculating software HSPiP (ver. 5.2, manufactured by Hansen-Solubility. com).

As a ratio of a distance (Ra) between HSP values of the solvent and the binder resin to an interaction radius (R0) indicating a solubility range of the binder resin (Ra/R0), a relative energy difference (RED) can be used to evaluate a solubility of the binder resin in the solvent. If the relative energy difference (RED) is 1.0 or less, the binder resin is proven to be soluble.

The distance (Ra) between the HSP values of the solvent and the binder resin can be calculated according to the following equation (1). Distance (Ra) between HSP values = [4(δd2 - δd1)2 + (δp2 - δp1)2 + (δh2 - δh1)2]1/2

In the above equation (1), the subscripts 1 and 2 of δd, δp, and 6h mean the solvent and the binder resin, respectively.

Thus, in the three-dimensional shaped object producing method and apparatus according to embodiments of the present invention, the solvent in the liquid that dissolves the binder resin has a boiling point of 100°C or higher and 210°C or lower, a relative energy difference (RED) between the binder resin and the solvent in the liquid is 1.0 or less, the secondary particles have a loose bulk density of 25% or higher and 55% or lower. When these conditions are satisfied, a balance between solubility of the binder resin and dryness of the solvent can be desirably adjusted, each layer can be stably shaped, and a conventional problem of deformation in shaping a flat plate can be solved.

The solvent in the liquid that dissolves the binder resin has a boiling point of 100°C or higher and 210°C or lower, preferably 120°C or higher and 180°C or lower.

The secondary particles have a loose bulk density of 25% or higher and 55% or lower, preferably 30% or higher and 50% or lower.

The loose bulk density is measured using e.g. a bulk specific gravity meter (manufactured by Kuramochi Scientific Instruments Co., Ltd., adaptable to JIS Z-2504).

### <Formation Process and Formation Device>

In the formation process, a layer is formed from the secondary particles including the primary particles and the binder resin. The formation process is implemented by the formation device. The formation process is implemented using the secondary particles including at least the primary particles and the binder resin to form a powder layer. The formation process is also referred to as a "powder layer forming process" in some cases.

### - Primary Particle -

The primary particles in the present disclosure include a ceramic as a main component. The ceramic means a sintered compact produced by heating and bake-hardening inorganic materials.

Herein, the main component means a ceramic in a content of more than 50% by mass based on the primary particles. The content of the ceramic in the primary particles is preferably 80% by mass or more, more preferably 90% by mass or more.

Examples of raw materials for the ceramic include, but are not limited to, glass, metal oxides, metal carbides, and metal nitrides.

Examples of glass include, but are not limited to, silica glass (quartz glass) and soda-lime silica glass.

Examples of the metal oxides include, but are not limited to, zirconia, alumina, and mullite (aluminosilicate mineral).

Examples of the metal carbides include, but are not limited to, silicon carbide and tungsten carbide.

Examples of the metal nitrides include, but are not limited to, silicon nitride and aluminum nitride.

Each of these ceramics may be used alone or in combination with others. Above all, zirconia, alumina, mullite (aluminosilicate mineral), tungsten carbide, silicon carbide, silicon nitride, and aluminum nitride are preferable from the viewpoint of maintaining high strength.

A powder for three-dimensional shaping is produced by preparing the secondary particles using the primary particles. The primary particles have small diameters, and are therefore poor in fluidity and difficult to handle. Thus, the primary particles are processed into the secondary particles to improve handlability.

A method for producing the secondary particles is not particularly limited and can be suitably selected to suit to a particular application. Examples of the method include, but are not limited to, a method in which the binder resin is mixed with the primary particles according to a known method.

A method for granulating the primary particles with the binder resin is not particularly limited, and can be selected as appropriate from known granulation methods. Examples of the method include, but are not limited to, a rolling flow method, a spray drying method, a stirring granulation method, a dipping method, and a kneader coating method. Also, these granulation methods can be implemented using various known commercially available coating and granulation apparatuses.

The secondary particles for use in the three-dimensional shaping include a binder resin. The binder resin is used e.g. for binding the primary particles together.

### - Binder Resin -

The binder resin included in the secondary particles contributes e.g. to binding between the primary particles, and to rebinding between the ceramic particles around the binder resin after dissolution of the binder resin in the liquid during liquid dripping.

Types of the binder resin are not particularly limited and can be suitably selected to suit to a particular application. Examples of the binder resin include, but are not limited to, acryl, maleic acid, acrylic polyol, silicone, butyral, polyester, polyvinyl acetate, vinyl chloride/vinyl acetate copolymer, polyethylene, polypropylene, polyacetal, ethylene/vinyl acetate copolymer, ethylene/(meth)acrylic acid copolymer, α-olefin/maleic anhydride copolymer, esterified α-olefin/maleic anhydride copolymer, polystyrene, poly(meth)acrylate, copolymer of α-olefin/maleic anhydride/vinyl group-containing monomer, styrene/maleic anhydride copolymer, styrene/(meth)acrylate copolymer, polyamide, epoxy resin, xylene resin, ketone resin, petroleum resin, rosin or its derivative, chroman-indene resin, terpene resin, polyurethane resin, synthetic rubbers such as styrene/butadiene rubber, polyvinyl butyral, polyvinyl alcohol, nitrile rubber, acrylic rubber, and ethylene/propylene rubber, as well as nitrocellulose. Each of these binder resins may be used alone or in combination with others. Above all, acrylic polyol, polyvinyl butyral, and polyvinyl alcohol are preferable.

A content of the binder resin in the secondary particles is not particularly limited and can be suitably selected to suit to a particular application. However, from the viewpoint of preventing cracking, defect generation, and deformation of the three-dimensional shaped object, the content of the binder resin is preferably 25% by mass or less, more preferably 20% by mass or less, even more preferably 15% by mass or less, particularly preferably 10% by mass or less. From the viewpoint of the strength of the green body, the lower limit of the binder resin content is preferably 1% by mass or more, more preferably 3% by mass or more.

Note that the secondary particles should not be subjected to heat treatment such as sintering.

The method for forming the powder layer is not particularly limited and can be suitably selected to suit to a particular application. Examples of the method include, but are not limited to, a method using e.g. a known counter rotating mechanism (counter roller) that is used in a selective laser sintering method described in Japanese Patent No. 3607300, a method of spreading a powder into a thin layer using a member such as brush, roller, and blade, a method of pressing surfaces of powder particles using a pressing member to spread the powder into a thin layer, and a method using a known powder laminate shaping apparatus.

When a powder layer formed from the secondary particles is formed on a support using a counter rotating mechanism (counter roller), a brush or blade, a pressing member, and other members, for example, a powder layer is formed by placing the secondary particles inside an outer frame (also referred to as "mold", "hollow cylinder", "cylindrical structure", etc. in some cases) and on a support that is disposed movably in a vertical direction while sliding on an inner wall of the outer frame inside the outer frame, using the counter rotating mechanism, the brush or blade, the pressing member, and other members. At this time, when a support that can move in a vertical direction inside the outer frame is used as a support, it is preferable that the support is placed at a position slightly lower than an upper end opening of the outer frame (by a thickness of the powder layer) and the powder is placed on the support.

Also, the powder layer can be automatically and simply formed using a known powder laminate shaping apparatus. Generally, a powder laminate shaping apparatus includes a recoater for laminating secondary particles, a movable feeding vessel for feeding the secondary particles onto a support, and a movable forming vessel for forming and laminating a layer formed from the secondary particles. In this powder laminate forming apparatus, the surface of the feeding vessel can be slightly raised above the surface of the forming vessel by raising the feeding vessel or lowering the forming vessel, or both operations. Thus, this powder laminate shaping apparatus can form a powder layer by layering the secondary particles from the feeding vessel side using a recoater, and laminate the powder layer by repeatedly moving the recoater.

An average thickness of the powder layer is not particularly limited and can be suitably selected to suit to a particular application. An average thickness of one layer is preferably 10 µm or larger and 200 µm or smaller, more preferably 30 µm or larger and 100 µm or smaller.

### <Application Process and Application Device>

In the application process, the liquid that dissolves the binder resin is applied on the layer formed in the formation process. The application process is implemented by an application device.

In the application process, the binder resin included in the secondary particles is dissolved in the liquid to return the secondary particles to the primary particles, so that voids formed between the secondary particles are filled with the primary particles. As a result, regions where the liquid is applied are fixed by the binder resin, and the liquid application regions are homogenized by collapsing the shape of the secondary particles, so that voids and unsolidified regions can be decreased by the liquid application regions. On the edges of the liquid application regions, irregularity in the planar direction resulting from the secondary particles can be decreased, and a shaping accuracy can be improved.

The application process is not particularly limited as long as a liquid that dissolves the binder resin included in the secondary particles is applied on predetermined regions, and can be suitably selected to suit to a particular application.

Examples of the method for applying the liquid on predetermined regions include, but are not limited to, a dispenser method, a spray method, and an inkjet method.

Among them, the dispenser method is excellent in quantitativity for droplets but narrows the application area. The spray method can facilitate formation of fine discharged droplets and apply the liquid on a wide application area and is excellent in application property, but is poor in quantitativity for droplets and causes scattering of the secondary particles due to the spray stream.

For this reason, the inkjet method is particularly preferable. The inkjet method has advantages of better droplet quantitativity compared to the spray method and of a wider application area compared to the dispenser method, and is preferable in that complex three-dimensional shapes can be accurately and efficiently formed.

In the case of the inkjet method, the application device has a nozzle that can apply the liquid on predetermined regions according to the inkjet method. As for the nozzle, a nozzle (discharge head) for a known inkjet printer can be desirably used, and the inkjet printer can be desirably used as an application device. Preferable examples of the inkjet printer include, but are not limited to, a printer SG7100 manufactured by RICOH COMPANY, LTD. The inkjet printer is preferable in that a liquid amount of one dripping from a head portion is large and an application area is wide, thus speeding up the application.

### <<Liquid>>

The liquid is not particularly limited as long as the liquid can dissolve the binder resin in the secondary particles and can be suitably selected to suit to a particular application.

The liquid contains a solvent and optionally other components.

### - Solvent -

The solvent is not particularly limited as long as the solvent can dissolve the binder resin in the secondary particles and can be suitably selected to suit to a particular application. Examples of the solvent include, but are not limited to, propylene glycol monoethyl ether, dimethyl sulfoxide (DMSO), 1-butanol, diacetone alcohol, and N-methyl-2-pyrrolidone. Each of these solvents may be used alone or in combination with others.

A content of the solvent in the liquid is not particularly limited and can be suitably selected to suit to a particular application, but is preferably 90% by mass or more, more preferably 95% by mass or more, particularly preferably 100% by mass.

### - Other Components -

Other components are not particularly limited and can be suitably selected to suit to a particular application. Examples of other components include, but are not limited to, dispersants, surfactants, resins, and inorganic particles.

### <Other Processes>

Other processes are not particularly limited, and can be suitably selected to suit to a particular application. Examples of other processes include, but are not limited to, a heating process.

Examples of the heating process include, but are not limited to, drying, degreasing, and sintering.

Although the heat treatment can be implemented depending on the shaping material, a shaped green body is generally characterized by its shape, and therefore, for preventing collapse of the green body, pressurization devices are not used in many cases. Particularly in sintering, pressure sintering (hot press) is often conducted to improve a sintered density, but the present disclosure basically presupposes atmospheric sintering without using hot press.

In the method for producing the three-dimensional shaped object as a ceramic according to an embodiment of the present invention, the three-dimensional shaped object is obtained after the raw materials for the three-dimensional shaped object are temporarily bound together. In this case, for example, when a resin is used for binding, the resin for binding may be used in a small amount, resulting in less volume shrinkage after sintering. As a result, even when shaping a large structural member, cracking during sintering can be prevented, and therefore, for example, a model having a dimension practical for a structural member can be shaped.

The three-dimensional shaping of the green body formed by repeating the formation and application processes is completed in a state that the green body is embedded in the powder.

At this time, the green body contains a large amount of solvent, and therefore has low strength and poor handlability. Thus, the green body should be dried.

Each layer can also be dried using an infrared heater or another apparatus after the formation and application processes.

The drying method is not particularly limited, and any known method can be used. However, a method that does not cause cracking and deformation should be selected depending on a type of the solvent. For example, if ethanol is used as the solvent, drying at 50°C for 24 hours is preferable.

The degreasing method is not particularly limited, and any known method can be used. For example, when alumina is used as the primary particles, the primary particles can be desirably degreased by a heat treatment under a nitrogen-substituted environment at 500°C for 3 hours, but the degreasing method is not particularly limited to this heat treatment.

The sintering method is not particularly limited, and any known method can be used. However, from the viewpoint of maximizing the effect of embodiments of the present invention, sintering under normal pressure is preferable. The atmosphere, and the heat treatment temperature and time should be adjusted depending on the material. For example, when alumina is used as the primary particles, a heat treatment under argon atmosphere at 1,550°C for 3 hours is suitable. Although increase in the heat treatment temperature can increase the density, there are disadvantages such as decreased strength and deformation due to formation of coarse particles instead, and therefore the conditions must be optimized.

As a sintering method, for example when the material is of a graphite type, for example, an electric current sintering method using a pulse electroheating or another way can be desirably used, but the sintering method is not limited to this electric current sintering method.

### (Three-Dimensional Shaped Object)

The three-dimensional shaped object according to an embodiment of the present invention is produced by the three-dimensional shaped object producing method according to an embodiment of the present invention.

Applications of the three-dimensional shaped object are not particularly limited and can be suitably selected to suit to a particular application. For example, the three-dimensional shaped object can be desirably used for meters, operation panels, and parts of automobiles, office automation equipment, electric and electronic equipment, cameras, or other equipment, as well as daily commodities, trial products, and other articles.

Here, an example of the method and apparatus for producing the three-dimensional shaped object according to an embodiment of the present invention will be explained below with reference to figures.

FIG. 3 is a functional block diagram illustrating an example of a three-dimensional shaped object producing apparatus.

The three-dimensional shaped object producing apparatus 100 in FIG. 3 includes a shaping portion 101 and a post-processing portion 102. The shaping portion 101 includes a formation device 1 and an application device 2. The post-processing portion 102 includes a heating device 3.

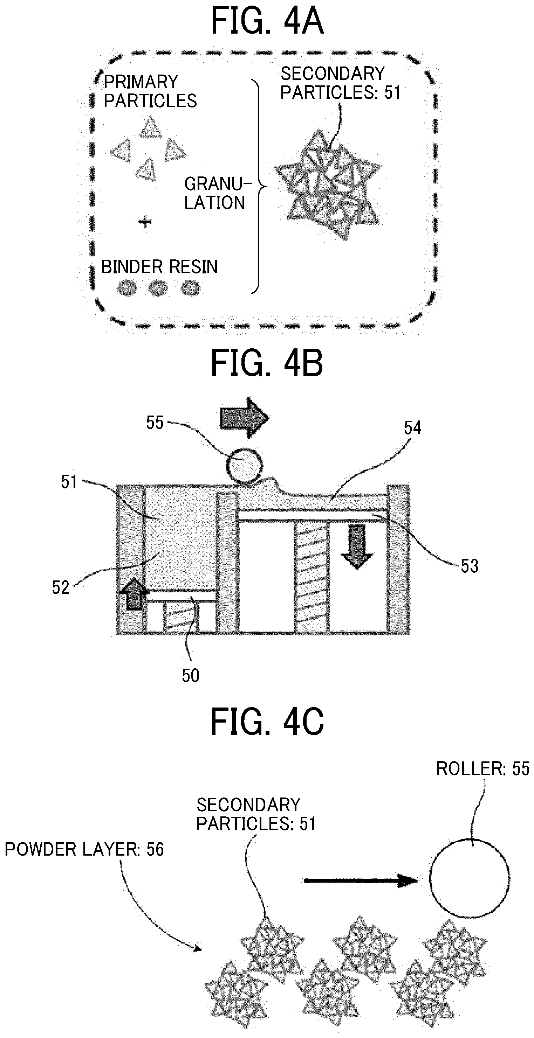

FIG. 4A to 4F are schematic diagrams illustrating an example of the three-dimensional shaped object producing method.

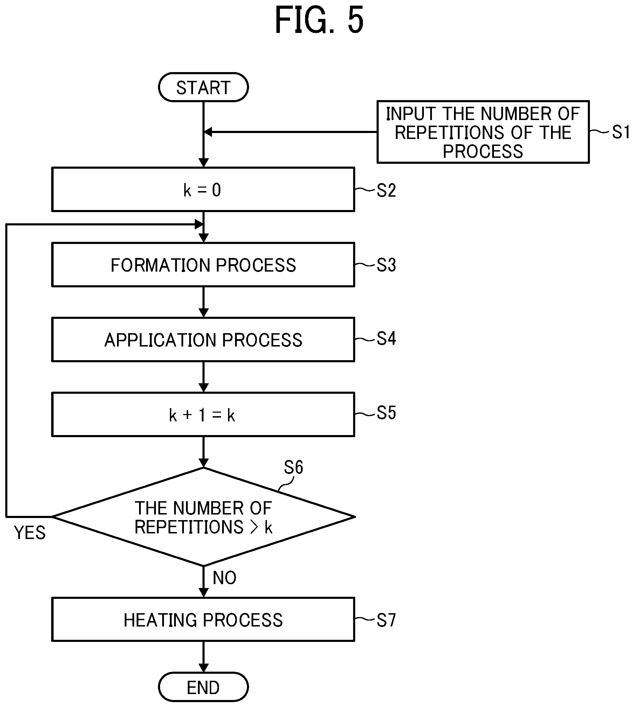

FIG. 5 is a flowchart illustrating an example of a process flow in the three-dimensional shaped object producing method. The process flow in the three-dimensional shaped object producing method according to an embodiment of the present invention will be explained below with reference to FIG. 3 and FIG. 4A to 4F.

In step S1, when a user inputs the number of repetitions of the process into the three-dimensional shaped object producing apparatus 100, the process proceeds to step S2.

In step S2, when the user inputs "k=0" into the three-dimensional shaped object producing apparatus 100, the process proceeds to step S3.

In step S3, when the formation process is implemented in the three-dimensional shaped object producing apparatus 100, the process proceeds to step S4.

Before the formation process, the secondary particles are granulated using the ceramic material-containing primary particles and the binder resin (see FIG. 4A).

In the formation process, a powder layer is formed from the secondary particles including the ceramic material-containing primary particles and the binder resin. For example, the formation process can be implemented using a formation device.

For example, as illustrated in FIG. 4B, the formation device includes a feeding-side powder storage vessel 52 for storing secondary particles 51, a shaping-side powder storage vessel 54 for forming a powder layer, and a leveling mechanism 55. The feeding-side powder storage vessel 52 includes a vertically movable stage 50. The shaping-side powder storage vessel 54 includes a vertically movable stage 53. When a roller as the leveling mechanism 55 moves from the feeding-side powder storage vessel 52 to the shaping-side powder storage vessel 54, the secondary particles 51 in the feeding-side powder storage vessel 52 moves to the shaping-side powder storage vessel 54 to form a powder layer 56 formed from the secondary particles 51 on the stage 53 (see FIG. 4C).

In step S4, when the application process is implemented in the three-dimensional shaped object producing apparatus 100, the process proceeds to step S5.

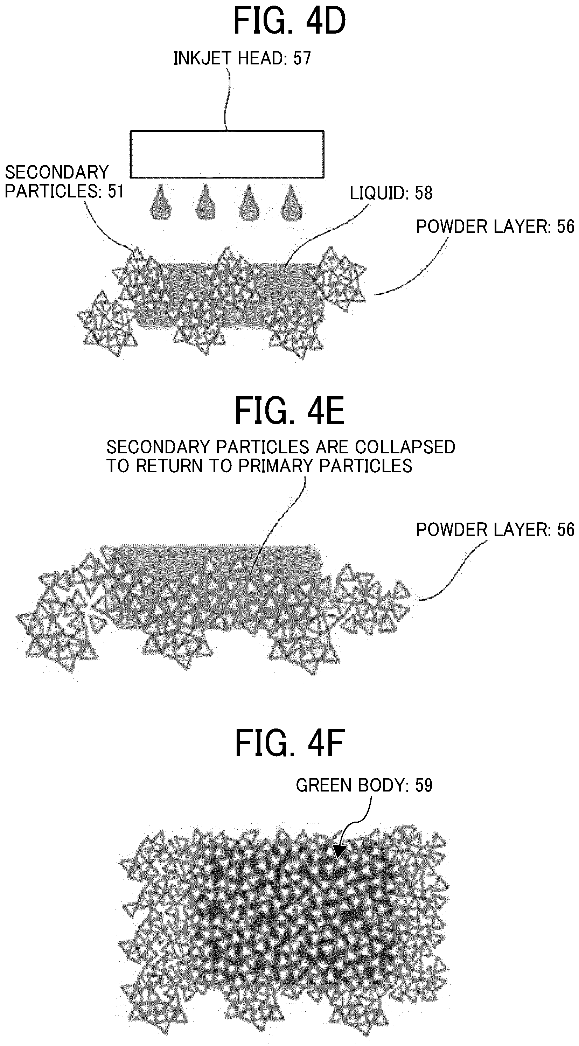

In the application process, a liquid that dissolves the binder resin is applied on the powder layer formed in the formation process, and the binder resin included in the secondary particles is dissolved in the liquid to return the secondary particles to the primary particles. For example, the application process is implemented using an application device. As the application device, for example, an inkjet head 57 as illustrated in FIG. 4D is used. Using the inkjet head 57, a liquid 58 that dissolves the binder resin is applied on predetermined regions of the powder layer 56. Then, as illustrated in FIG. 4E, the binder resin included in the secondary particles is dissolved in the liquid to return the secondary particles to the primary particles, so that voids formed between the secondary particles are filled with the primary particles. As a result, regions where the liquid is applied are fixed by the binder resin, and the liquid application regions are homogenized by collapsing the shape of the secondary particles, so that voids and unsolidified regions can be decreased by the liquid application regions.

In step S5, when the user inputs "k+1=k", the process proceeds to step S6.

In step S6, if k is smaller than the number of repetitions of the process, the process returns to step S3, and if k is greater than the number of repetitions of the process, the process proceeds to step S7.

The formation process and the application process are repeated until a desired number of laminated layers are obtained. Thereby, a laminated structure is formed on the stage 53. This laminated structure is dried to obtain a green body 59 as illustrated in FIG. 4F.

In step S7, the heating process is implemented in the three-dimensional shaped object producing apparatus 100, then this processing is completed. In the heating process, the dried green body is heated. The heating process is implemented using e.g. the heating device 3. Examples of the heating device 3 include, but are not limited to, a heater. In the heating process, for example, decomposition and removal of the resin and sintering of the green body can be simultaneously conducted. The aforementioned process produces a sintered compact in which the ceramic raw material is sintered.

### EXAMPLES

The present invention are described below by way of examples, but the invention is not limited in any way to these examples.

### (Examples 1 to 10, and Comparative Examples 1 to 14)

Three-dimensional objects were produced according to a flowchart illustrated in FIG. 5 and the three-dimensional shaped object producing method illustrated in FIG. 4A to 4F.

A powder prepared as follows using materials presented in Table 1 below was used.

### <Preparation of Primary and Secondary Particles>

First, primary particles (alumina) and a binder resin (acrylic polyol, polyvinyl butyral (PVB), or polyvinyl alcohol (PVA)) presented in Table 1 were mixed together and thoroughly dispersed in a solvent (ethanol) to prepare a slurry.

Next, the resulting slurry was granulated into a droplet form using a spray granulator, a dry sintering furnace, and other equipment, and then dried. Optionally, the droplets were classified by size to prepare secondary particles presented in Table 1.

Subsequently, the secondary particles were sintered. The secondary particles have a three-dimensional structure in which fine primary particles bind to each other so as to have interstitial spaces, to constitute almost spherical secondary particles.

Each of the obtained secondary particles was measured for a loose bulk density as follows. The results are presented in Table 2.

### <Measurement of Loose Bulk Density>

In each of the secondary particles, a loose bulk density was measured using a bulk density meter (manufactured by Kuramochi Scientific Instruments Co., Ltd., adaptable to JIS Z-2504).

### <Shaping>

For the shaping, a binder jet shaping apparatus (manufactured by Desktop Metal, Inc.) and a simple prototype machine that was partially adapted to the solvent were used.

An interval between layers was set to 100 µm. As a shaping model, a flat plate of 50 mm × 50 mm × 4 mm was used. A liquid that dissolves the binder resin presented in Table 1 was applied on desired regions. The application amount of the liquid was set to 600 dpi. The aforementioned process produced each green body.

### <Degreasing and Sintering>

The obtained green body was degreased and sintered in an electric furnace. Herein, the green body was heated to each predetermined temperature ranging from 1,100°C to 1,500°C at a rate of 5°C/min, then each green body was maintained at this temperature, and cooled in the furnace. The aforementioned process produced each sintered compact.

**Table 1**

| | Type of primary particles | Type of binder resin in secondary particles | Content of binder resin (% by mass) | Type of liquid for dissolving binder resin | Boiling point (°C) |
|---|---|---|---|---|---|
| Example 1 | Alumina | Acrylic polyol | 5 | Propylene glycol monoethyl ether | 133 |
| Example 2 | Mullite | Polyvinyl butyral | 5 | Propylene glycol monoethyl ether | 133 |
| Comparative Example 1 | Alumina | Polyvinyl alcohol | 5 | Propylene glycol monoethyl ether | 133 |
| Example 3 | Mullite | Acrylic polyol | 5 | DMSO | 189 |
| Example 4 | Alumina | Polyvinyl butyral | 5 | DMSO | 189 |
| Example 5 | Alumina | Polyvinyl alcohol | 5 | DMSO | 189 |
| Comparative Example 2 | Alumina | Acrylic polyol | 5 | 1-butanol | 117 |
| Example 6 | Alumina | Polyvinyl butyral | 5 | 1-butanol | 117 |
| Comparative Example 3 | Mullite | Polyvinyl alcohol | 5 | 1-butanol | 117 |
| Example 7 | Alumina | Acrylic polyol | 5 | Diacetone alcohol | 166 |
| Example 8 | Mullite | Polyvinyl butyral | 5 | Diacetone alcohol | 166 |
| Comparative Example 4 | Alumina | Polyvinyl alcohol | 5 | Diacetone alcohol | 166 |
| Example 9 | Mullite | Acrylic polyol | 5 | N-methyl-2-pyrrolidone | 202 |
| Example 10 | Alumina | Polyvinyl butyral | 5 | N-methyl-2-pyrrolidone | 202 |
| Comparative Example 5 | Alumina | Polyvinyl alcohol | 5 | N-methyl-2-pyrrolidone | 202 |
| Comparative Example 6 | Alumina | Acrylic polyol | 5 | Ethyl acetate | 77 |
| Comparative Example 7 | Alumina | Polyvinyl butyral | 5 | Ethyl acetate | 77 |
| Comparative Example 8 | Mullite | Polyvinyl alcohol | 5 | Ethyl acetate | 77 |
| Comparative Example 9 | Alumina | Acrylic polyol | 5 | Methylethylketone | 78 |
| Comparative Example 10 | Mullite | Polyvinyl butyral | 5 | Methylethylketone | 78 |
| Comparative Example 11 | Alumina | Polyvinyl alcohol | 5 | Methylethylketone | 78 |
| Comparative Example 12 | Mullite | Acrylic polyol | 5 | Diethylene glycol | 244 |
| Comparative Example 13 | Alumina | Polyvinyl butyral | 5 | Diethylene glycol | 244 |
| Comparative Example 14 | Alumina | Polyvinyl alcohol | 5 | Diethylene glycol | 244 |

**Table 2**

| | Loose bulk density of secondary particles (%) | Distance between HSP values (Ra) | Interaction radius R0 of binder resin | Relative energy difference (RED): Ra/R0 |
|---|---|---|---|---|
| Example 1 | 31 | 11.23 | 11.67 | 0.96 |
| Example 2 | 31 | 5.28 | 9.8 | 0.54 |
| Comparative Example 1 | 31 | 11.95 | 1.5 | 7.97 |
| Example 3 | 31 | 5.49 | 11.67 | 0.47 |
| Example 4 | 31 | 9.70 | 9.8 | 0.99 |
| Example 5 | 31 | 1.28 | 1.5 | 0.85 |
| Comparative Example 2 | 31 | 12.21 | 11.67 | 1.05 |
| Example 6 | 31 | 7.20 | 9.8 | 0.73 |
| Comparative Example 3 | 31 | 13.26 | 1.5 | 8.84 |
| Example 7 | 31 | 9.89 | 11.67 | 0.85 |
| Example 8 | 31 | 4.92 | 9.8 | 0.50 |
| Comparative Example 4 | 31 | 10.12 | 1.5 | 6.75 |
| Example 9 | 31 | 5.44 | 11.67 | 0.47 |
| Example 10 | 31 | 6.28 | 9.8 | 0.64 |
| Comparative Example 5 | 31 | 5.05 | 1.5 | 3.37 |
| Comparative Example 6 | 31 | 11.79 | 11.67 | 1.01 |
| Comparative Example 7 | 31 | 5.64 | 9.8 | 0.58 |
| Comparative Example 8 | 31 | 12.78 | 1.5 | 8.52 |
| Comparative Example 9 | 31 | 10.50 | 11.67 | 0.90 |
| Comparative Example 10 | 31 | 6.92 | 9.8 | 0.71 |
| Comparative Example 11 | 31 | 10.44 | 1.5 | 6.96 |
| Comparative Example 12 | 31 | 11.47 | 11.67 | 0.98 |
| Comparative Example 13 | 31 | 10.81 | 9.8 | 1.10 |
| Comparative Example 14 | 31 | 10.96 | 1.5 | 7.30 |

Details of each material in Table 1 are as follows.

### - Primary Particle -

*Alumina: AA series, manufactured by SUMITOMO CHEMICAL COMPANY, LIMITED
*Mullite: special order product of KM series, manufactured by KCM Corporation

### - Binder Resin -

*Acrylic polyol: 6000 series, manufactured by TAISEI FINE CHEMICAL CO,. LTD.
*Polyvinyl butyral (PVB): S-LEC B, manufactured by Sekisui Chemical Company, Limited
*Polyvinyl alcohol (PVA): SELVOL, manufactured by Sekisui Chemical Company, Limited

The HSP values (dD, dP, dH) of the solvent and the binder resin, and the interaction radius (R0) of the binder resin are presented in Table 3.

**Table 3**

| | | HSP value | | | Interaction radius of binder resin (R0) |
|---|---|---|---|---|---|
| | | dD | dP | dH | |
| Solvent | Diacetone alcohol | 15.8 | 8.2 | 10.8 | - |
| | Ethyl acetate | 15.8 | 5.3 | 7.2 | - |
| | Propylene glycol monoethyl ether | 15.6 | 6.3 | 11.6 | - |
| | DMSO | 18.4 | 16.4 | 10.2 | - |
| | 1-butanol | 16.0 | 5.7 | 15.8 | - |
| | N-methyl-2-pyrrolidone | 18.0 | 12.3 | 7.2 | - |
| | Methylethylketone | 16.0 | 9.0 | 5.1 | - |
| | Diethylene glycol | 16.6 | 12.0 | 19.0 | - |
| Binder resin | Acrylic polyol | 20.27 | 12.38 | 10.19 | 11.67 |
| | Polyvinyl butyral (PVB) | 18.12 | 6.72 | 10.07 | 9.8 |
| | Polyvinyl alcohol (PVA) | 19.0 | 16.0 | 10.0 | 1.5 |

| | | | | | |
|---|---|---|---|---|---|
| *DMSO: dimethyl sulfoxide | | | | | |

For each of the obtained green bodies and sintered compacts, "Shapability of flat plate", "Warp evaluation", and "Bleeding evaluation" were investigated as described below. The results are presented in Table 4.

### <Shapability of Flat Plate>

Shapability of a flat plate of 50 mm × 50 mm × 4 mm was evaluated depending on whether or not shaping of the flat plate could be completed up to the 4 mm height with no problem, in accordance with the following criteria.

### [Evaluation Criteria]

Good: No problem
Fair: Some defects but no crashing
Poor: Failure in shaping due to hitting against the recoater, and other problems

### <Warp Evaluation>

Each of the shaped objects was taken out and then dried, a warp amount on an end portion of the object in a green body state was measured with a center position of the test piece as a reference using a laser microscope (VK-X1000) manufactured by KEYENCE CORPORATION, and warp was evaluated in accordance with the following criteria.

### [Evaluation Criteria]

Good: Warp amount is less than 200 µm
Fair: Warp amount is 200 µm or more and 1 mm or less
Poor: Warp amount is more than 1 mm

### <Bleeding Evaluation>

To confirm whether or not each shaped object was wider (fatter) than the initial shaped surface, a deviation in the size (spreading amount) of the shaped object in the green body state from a target dimension was measured using a laser microscope (VK-X1000) manufactured by KEYENCE CORPORATION, and bleeding was evaluated in accordance with the following criteria.

### [Evaluation Criteria]

Good: Spreading amount is less than 200 µm
Fair: Spreading amount is 200 µm or more and 1 mm or less
Poor: Spreading amount is more than 1 mm

**Table 4**

| | Shapability of 50x50x4 mm flat plate | Warp evaluation | Bleeding evaluation |
|---|---|---|---|
| Example 1 | Good | Good | Good |
| Example 2 | Good | Good | Good |
| Comparative Example 1 | Fair | Poor | Good |
| Example 3 | Good | Good | Fair |
| Example 4 | Good | Good | Fair |
| Example 5 | Good | Good | Fair |
| Comparative Example 2 | Good | Poor | Good |
| Example 6 | Good | Good | Good |
| Comparative Example 3 | Fair | Poor | Good |
| Example 7 | Good | Good | Fair |
| Example 8 | Good | Good | Fair |
| Comparative Example 4 | Fair | Poor | Fair |
| Example 9 | Good | Good | Fair |
| Example 10 | Good | Good | Fair |
| Comparative Example 5 | Fair | Poor | Poor |
| Comparative Example 6 | Poor | Poor | - |
| Comparative Example 7 | Poor | Poor | - |
| Comparative Example 8 | Poor | Poor | - |
| Comparative Example 9 | Poor | Poor | - |
| Comparative Example 10 | Poor | Poor | - |
| Comparative Example 11 | Poor | Poor | - |
| Comparative Example 12 | Good | Poor | Poor |
| Comparative Example 13 | Good | Poor | Poor |
| Comparative Example 14 | Good | Poor | Poor |

| | | | |
|---|---|---|---|
| * In Table 4, symbol " - " of Comparative Examples 6 to 11 in the column "Bleeding evaluation" indicates "not detected". | | | |

### (Examples 11 to 19, and Comparative Examples 15 to 20)

Secondary particles were obtained in the same manner as in Examples 1 to 10 and Comparative Examples 1 to 14, except that materials presented in Table 5 below were used. Then the secondary particles were shaped using liquids presented in Table 5 to obtain shaped objects of Examples 11 to 19 and Comparative Examples 15 to 20.

A loose bulk density of each of the obtained secondary particles was measured in the same manner as in Examples 1 to 10 and Comparative Examples 1 to 14. The results are presented in Table 6.

Subsequently, for each of the obtained green bodies and sintered compacts, "Shapability of flat plate", "Warp evaluation", and "Bleeding evaluation" were investigated in the same manner as in Examples 1 to 10 and Comparative Examples 1 to 14. The results are presented in Table 7.

**Table 5**

| | Type of primary particles | Type of binder resin in secondary particles | Content of binder resin (% by mass) | Type of liquid for dissolving binder resin | Boiling point (°C) |
|---|---|---|---|---|---|
| Comparative Example 15 | Alumina | Polyvinyl butyral | 5 | N-methyl-2-pyrrolidone | 202 |
| Example 11 | Alumina | | 5 | | |
| Example 12 | Alumina | | 5 | | |
| Example 13 | Alumina | | 5 | | |
| Comparative Example 16 | Alumina | | 5 | | |
| Comparative Example 17 | Alumina | Polyvinyl butyral | 5 | 1-butanol | 117 |
| Example 14 | Alumina | | 5 | | |
| Example 15 | Alumina | | 5 | | |
| Example 16 | Alumina | | 5 | | |
| Comparative Example 18 | Alumina | | 5 | | |
| Comparative Example 19 | Alumina | Acrylic polyol | 5 | Propylene glycol monoethyl ether | 133 |
| Example 17 | Alumina | | 5 | | |
| Example 18 | Alumina | | 5 | | |
| Example 19 | Alumina | | 5 | | |
| Comparative Example 20 | Alumina | | 5 | | |

**Table 6**

| | Loose bulk density of secondary particles (%) | Distance between HSP values (Ra) | Interaction radius of binder resin (R0) | Relative energy difference (RED): Ra/R0 |
|---|---|---|---|---|
| Comparative Example 15 | 20 | 6.28 | 9.8 | 0.64 |
| Example 11 | 25 | 6.28 | 9.8 | 0.64 |
| Example 12 | 40 | 6.28 | 9.8 | 0.64 |
| Example 13 | 55 | 6.28 | 9.8 | 0.64 |
| Comparative Example 16 | 60 | 6.28 | 9.8 | 0.64 |
| Comparative Example 17 | 20 | 7.20 | 9.8 | 0.73 |
| Example 14 | 25 | 7.20 | 9.8 | 0.73 |
| Example 15 | 40 | 7.20 | 9.8 | 0.73 |
| Example 16 | 55 | 7.20 | 9.8 | 0.73 |
| Comparative Example 18 | 60 | 7.20 | 9.8 | 0.73 |
| Comparative Example 19 | 20 | 11.23 | 11.67 | 0.96 |
| Example 17 | 25 | 11.23 | 11.67 | 0.96 |
| Example 18 | 40 | 11.23 | 11.67 | 0.96 |
| Example 19 | 55 | 11.23 | 11.67 | 0.96 |
| Comparative Example 20 | 60 | 11.23 | 11.67 | 0.96 |

**Table 7**

| | Shapability of 50x50x4 mm flat plate | Warp evaluation | Bleeding evaluation |
|---|---|---|---|
| Comparative Example 15 | Poor | Poor | Poor |
| Example 11 | Good | Good | Fair |
| Example 12 | Good | Good | Good |
| Example 13 | Good | Good | Good |
| Comparative Example 16 | Poor (liquid overflows) | - | - |
| Comparative Example 17 | Poor | Poor | Good |
| Example 14 | Good | Good | Good |
| Example 15 | Good | Good | Good |
| Example 16 | Good | Good | Good |
| Comparative Example 18 | Poor (liquid overflows) | - | - |
| Comparative Example 19 | Poor | Poor | Good |
| Example 17 | Good | Good | Good |
| Example 18 | Good | Good | Good |
| Example 19 | Good | Good | Good |
| Comparative Example 20 | Poor (liquid overflows) | - | - |

| | | | |
|---|---|---|---|
| * In Table 7, symbol " - " of Comparative Examples 16, 18, and 20 in the columns "Warp evaluation" and "Bleeding evaluation" indicates "not detected". | | | |

## Claims

1. A three-dimensional shaped object producing method comprising:
forming (S3) a layer from secondary particles (51), the secondary particles (51) comprising a binder resin and primary particles containing a ceramic material; and
applying (S4) a liquid that dissolves the binder resin on the formed layer,
the liquid containing a solvent having a boiling point of 100°C or higher and 210°C or lower,
a relative energy difference between the binder resin and the solvent being 1.0 or less, wherein the relative energy difference is determined from a Hansen solubility parameter value, and
the secondary particles (51) having a loose bulk density of 25% or higher and 55% or lower, wherein the loose bulk density is measured using a bulk specific gravity meter adaptable to JIS Z-2504.

2. The method according to claim 1, wherein the solvent has a boiling point of 120°C or higher and 180°C or lower.

3. The method according to claim 1 or 2, wherein the secondary particles (51) have a loose bulk density of 30% or higher and 50% or lower.

4. The method according to any one of claims 1 to 3, wherein the binder resin comprises at least one selected from the group consisting of an acrylic polyol resin, a polyvinyl butyral resin, and a polyvinyl alcohol resin.

5. The method according to any one of claims 1 to 4, wherein the solvent comprises at least one selected from the group consisting of propylene glycol monoethyl ether, dimethyl sulfoxide, 1-butanol, diacetone alcohol, and N-methyl-2-pyrrolidone.

6. The method according to any one of claims 1 to 5, wherein the primary particles contain at least one selected from the group consisting of alumina, silicon nitride, mullite, zirconia, silicon carbide, tungsten carbide, and aluminum nitride.

7. The method according to any one of claims 1 to 6, wherein the applying includes applying the liquid by an inkjet method.

8. The method according to any one of claims 1 to 7, further comprising volatilizing the liquid.

9. A system comprising:
secondary particles (51) comprising a binder resin and primary particles containing a ceramic material;
a liquid that dissolves the binder resin,
the liquid containing a solvent having a boiling point of 100°C or higher and 210°C or lower,
a relative energy difference between the binder resin and the solvent being 1.0 or less, wherein the relative energy difference is determined from a Hansen solubility parameter value, and
the secondary particles (51) having a loose bulk density of 25% or higher and 55% or lower, wherein the loose bulk density is measured using a bulk specific gravity meter adaptable to JIS Z-2504; and
a three-dimensional shaped object producing apparatus (100) comprising:
a formation device (1) accommodating the secondary particles (51) and configured to form a layer from the secondary particles (51); and
an application device (2) accommodating the liquid and configured to apply the liquid on the layer formed by the formation device (1).

10. A three-dimensional shaped object produced by the method according to any one of claims 1 to 8.

## Patentansprüche

1. Verfahren zur Herstellung eines dreidimensional geformten Objekts, umfassend:
Bilden (S3) einer Schicht aus Sekundärpartikeln (51), wobei die Sekundärpartikel (51) ein Bindemittelharz und Primärpartikel, die ein keramisches Material enthalten, umfassen; und
Aufbringen (S4) einer Flüssigkeit, die das Bindemittelharz auf der gebildeten Schicht auflöst,
wobei die Flüssigkeit ein Lösungsmittel mit einem Siedepunkt von 100°C oder höher und 210°C oder niedriger enthält,
wobei eine relative Energiedifferenz zwischen dem Bindemittelharz und dem Lösungsmittel 1,0 oder weniger beträgt, wobei die relative Energiedifferenz aus einem Hansen-Löslichkeitsparameterwert bestimmt wird, und
wobei die Sekundärpartikel (51) eine lose Schüttdichte von 25 % oder höher und 55 % oder niedriger aufweisen, wobei die lose Schüttdichte unter Verwendung eines an JIS Z-2504 anpassbaren Schüttdichte-Messgeräts gemessen wird.

2. Verfahren nach Anspruch 1, wobei das Lösungsmittel einen Siedepunkt von 120°C oder höher und 180°C oder niedriger aufweist.

3. Verfahren nach Anspruch 1 oder 2, wobei die Sekundärpartikel (51) eine Schüttdichte von 30 % oder höher und 50 % oder niedriger aufweisen.

4. Verfahren nach einem der Ansprüche 1 bis 3, wobei das Bindemittelharz mindestens eines aus der Gruppe bestehend aus einem Acrylpolyolharz, einem Polyvinylbutyralharz und einem Polyvinylalkoholharz umfasst.

5. Verfahren nach einem der Ansprüche 1 bis 4, wobei das Lösungsmittel mindestens eines aus der Gruppe bestehend aus Propylenglykolmonoethylether, Dimethylsulfoxid, 1-Butanol, Diacetonalkohol und N-Methyl-2-pyrrolidon umfasst.

6. Verfahren nach einem der Ansprüche 1 bis 5, wobei die Primärpartikel mindestens eines aus der Gruppe bestehend aus Aluminiumoxid, Siliciumnitrid, Mullit, Zirkondioxid, Siliciumcarbid, Wolframcarbid und Aluminiumnitrid enthalten.

7. Verfahren nach einem der Ansprüche 1 bis 6, wobei das Auftragen ein Auftragen der Flüssigkeit durch ein Tintenstrahlverfahren umfasst.

8. Verfahren nach einem der Ansprüche 1 bis 7, das ferner ein Verflüchtigen der Flüssigkeit umfasst.

9. System, umfassend:
Sekundärpartikel (51), die ein Bindemittelharz umfassen, und Primärpartikel, die ein Keramikmaterial enthalten;
eine Flüssigkeit, die das Bindemittelharz auflöst,
wobei die Flüssigkeit ein Lösungsmittel mit einem Siedepunkt von 100°C oder höher und 210°C oder niedriger enthält,
wobei eine relative Energiedifferenz zwischen dem Bindemittelharz und dem Lösungsmittel 1,0 oder weniger beträgt, wobei die relative Energiedifferenz aus einem Hansen-Löslichkeitsparameterwert bestimmt wird, und
wobei die Sekundärpartikel (51) eine lose Schüttdichte von 25 % oder höher und 55 % oder niedriger aufweisen, wobei die lose Schüttdichte unter Verwendung eines an JIS Z-2504 anpassbaren Schüttdichte-Messgeräts gemessen wird; und
eine Vorrichtung (100) zur Herstellung eines dreidimensional geformten Objekts, umfassend:
eine Formungsvorrichtung (1), die die Sekundärpartikel (51) aufnimmt und so konfiguriert ist, dass sie eine Schicht aus den Sekundärpartikeln (51) bildet; und
eine Aufbringungsvorrichtung (2), die die Flüssigkeit aufnimmt und so konfiguriert ist, dass sie die Flüssigkeit auf die von der Formungsvorrichtung (1) gebildete Schicht aufbringt.

10. Dreidimensional geformtes Objekt, das durch das Verfahren nach einem der Ansprüche 1 bis 8 hergestellt ist.

## Revendications

1. Procédé de fabrication d'objet façonné tridimensionnel comprenant :
la formation (S3) d'une couche à partir de particules secondaires (51), les particules secondaires (51) comprenant une résine liante et des particules primaires contenant un matériau céramique ; et
l'application (S4) d'un liquide qui dissout la résine liante sur la couche formée,
le liquide contenant un solvant ayant un point d'ébullition supérieur ou égal à 100 °C et inférieur ou égal à 210 °C,
une différence d'énergie relative entre la résine liante et le solvant étant inférieure ou égale à 1,0, dans lequel la différence d'énergie relative est déterminée à partir d'une valeur de paramètre de solubilité de Hansen, et
les particules secondaires (51) ont une masse volumique apparente à l'état non tassé supérieure ou égale à 25 % et inférieure ou égale à 55 %, dans lequel la masse volumique apparente à l'état non tassé est mesurée à l'aide d'un appareil de mesure de densité apparente adaptable à la norme JIS Z-2504.

2. Procédé selon la revendication 1, dans lequel le solvant a un point d'ébullition est supérieur ou égal à 120 °C et inférieur ou égal à 180 °C.

3. Procédé selon la revendication 1 ou 2, dans lequel les particules secondaires (51) ont une masse volumique apparente à l'état non tassé supérieure ou égale à 30 % et inférieure ou égale à 50 %.

4. Procédé selon l'une quelconque des revendications 1 à 3, dans lequel la résine liante comprend au moins un élément sélectionné dans le groupe constitué d'une résine de polyol acrylique, d'une résine de polybutyral vinylique, et d'une résine de polyalcool vinylique.

5. Procédé selon l'une quelconque des revendications 1 à 4, dans lequel le solvant comprend au moins un élément sélectionné dans le groupe constitué de l'éther monoéthylique de propylène glycol, du sulfoxyde de diméthyle, du 1-butanol, d'alcool diacétonique, et de la N-méthyl-2-pyrrolidone.

6. Procédé selon l'une quelconque des revendications 1 à 5, dans lequel les particules primaires contiennent au moins un élément sélectionné dans le groupe constitué de l'alumine, du nitrure de silicium, de la mullite, de la zircone, du carbure de silicium, du carbure de tungstène, et du nitrure d'aluminium.

7. Procédé selon l'une quelconque des revendications 1 à 6, dans lequel l'application inclut l'application du liquide par un procédé à jet d'encre.

8. Procédé selon l'une quelconque des revendications 1 à 7, comprenant en outre la volatilisation du liquide.

9. Système comprenant :
des particules secondaires (51) comprenant une résine liante et des particules primaires contenant un matériau céramique ;
un liquide qui dissout la résine liante,
le liquide contenant un solvant ayant un point d'ébullition supérieur ou égal à 100 °C et inférieur ou égal à 210 °C,
une différence d'énergie relative entre la résine liante et le solvant étant inférieure ou égale à 1,0, dans lequel la différence d'énergie relative est déterminée à partir d'une valeur de paramètre de solubilité de Hansen, et
les particules secondaires (51) ont une masse volumique apparente à l'état non tassé supérieure ou égale à 25 % et inférieure ou égale à 55 %, dans lequel la masse volumique apparente non tassée est mesurée à l'aide d'un appareil de mesure de densité apparente adaptable à la norme JIS Z-2504 ; et
un appareil de production d'objet façonné tridimensionnel (100) comprenant :
un dispositif de formation (1) logeant les particules secondaires (51) et configuré pour former une couche à partir des particules secondaires (51) ; et
un dispositif d'application (2) logeant le liquide et configuré pour appliquer le liquide sur la couche formée par le dispositif de formation (1).

10. Objet façonné tridimensionnel produit par le procédé selon l'une quelconque des revendications 1 à 8.
